(19) Europäisches Patentamt
European Patent Office
Office européen des brevets

(11) **EP 2 702 370 B1**

(12) **EUROPÄISCHE PATENTSCHRIFT**

(45) Veröffentlichungstag und Bekanntmachung des Hinweises auf die Patenterteilung:
**01.08.2018 Patentblatt 2018/31**

(21) Anmeldenummer: **12731295.7**

(22) Anmeldetag: **27.04.2012**

(51) Int Cl.:
*G01F 1/84* (2006.01)   *G01F 25/00* (2006.01)

(86) Internationale Anmeldenummer:
**PCT/EP2012/001824**

(87) Internationale Veröffentlichungsnummer:
**WO 2012/146386 (01.11.2012 Gazette 2012/44)**

(54) **VERFAHREN ZUM BETREIBEN EINES RESONANZMESSSYSTEMS**

METHOD FOR OPERATING A RESONANCE MEASURING SYSTEM

PROCÉDÉ POUR FAIRE FONCTIONNER UN SYSTÈME DE MESURE PAR RÉSONANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2011 DE 102011100092**

(43) Veröffentlichungstag der Anmeldung:
**05.03.2014 Patentblatt 2014/10**

(73) Patentinhaber: **KROHNE Messtechnik GmbH 47058 Duisburg (DE)**

(72) Erfinder:
• **KOLAHI, Kourosh 47051 Duisburg (DE)**
• **STORM, Ralf 45131 Essen (DE)**
• **POREMBA, Andreas 42107 Wuppertal (DE)**

(74) Vertreter: **Gesthuysen Patent- und Rechtsanwälte Patentanwälte Huyssenallee 100 45128 Essen (DE)**

(56) Entgegenhaltungen:
**EP-A1- 0 300 301     WO-A1-88/02105
DE-T2- 3 782 818     DE-T2- 60 311 897
DE-T2- 69 214 290**

## Beschreibung

Die Erfindung betrifft ein Verfahren zum Betreiben eines Coriolis-Massedurchflussmessgerätsgemäß dem Oberbegriff von Patentanspruch 1.

Coriolis-Massedurchflussmessgeräte werden vor allem in der industriellen Prozessmesstechnik dort eingesetzt, wo mit hoher Genauigkeit Masseströme bestimmt werden sollen. Die Funktionsweise von Coriolis-Massedurchflussmessgeräten beruht darauf, dass wenigstens ein von einem Medium durchströmtes Messrohr von einem Schwingungserzeuger zu einer Schwingung angeregt wird, wobei das massebehaftete Medium aufgrund der von zwei orthogonalen Geschwindigkeiten - die der Strömung und die des Messrohres - hervorgerufenen Coriolis-Trägheitskraft auf die Wandung des Messrohrs rückwirkt. Diese Rückwirkung des Mediums auf das Messrohr führt zu einer Änderung der Messrohrschwingung im Vergleich zu dem undurchströmten Schwingungszustand des Messrohrs. Durch Erfassung dieser Besonderheiten der Schwingungen des durchströmten Messrohrs - Phasendifferenz und damit Zeitdifferenz zwischen den Auslenkungen zweier Messrohrbereiche, die im undurchströmten Zustand des Messrohres in Phase schwingen - kann der Massedurchfluss durch das Messrohr mit hoher Genauigkeit bestimmt werden. Bei homogenen Medien können mit hochwertigen Coriolis-Massedurchflussmessgeräten Genauigkeiten von etwa 0,04 % vom Messwert erzielt werden, weshalb Coriolis-Massedurchflussmessgeräte häufig auch im eichpflichtigen Verkehr eingesetzt werden.

Die hohen Genauigkeitsanforderungen können nur eingehalten werden, wenn der Zustand des Coriolis-Massedurchflussmessgeräts genau erfasst wird und das Messergebnis beeinflussende Größen bei der Berechnung des Massedurchflusses berücksichtigt werden. Dazu werden informationstragende Signale, also die Anregungssignale (Ströme und/oder Spannungen) und die interessierenden Primärmesssignale - also die Auslenkungen des Messrohres - über Messkanäle erfasst. Auch andere bekannte Einflussgrößen, wie beispielsweise Temperaturen und mechanische Spannungen an signifikanten Stellen des Messrohres können über Messkanäle erfasst werden und durch Verfahren zum Betreiben von Coriolis-Massedurchflussmessgeräten der Bestimmung des Massedurchflusses zugrunde gelegt werden. Derartige Verfahren basieren häufig auf einem mathematischen Model des Coriolis-Massedurchflussmessgeräts, dessen interne Modellparameter während des Messbetriebs bestimmt werden, so dass eine Korrektur der Massedurchflussmessung im laufenden Betrieb möglich ist (z. B. Schröder, T., Kolahi, K., Röck, H.: "Neuartige Regelung eines Coriolis-Massedurchflussmessers", Technisches Messen 71, 2004, Seiten 259-268).

Aus der WO 88/02105 A1 ist ein Coriolis-Massedurchflussmessgerät bekannt, bei dem mittels eines Multiplexers die Sensorsignale zweier Schwingungsaufnehmer über einen einzigen Messkanal erfasst werden können. Demgegenüber offenbart die DE 692 14 290 T2 ein Coriolis-Massedurchflussmessgerät, das die Weiterleitung der Sensorsignale zweier Schwingungsaufnehmer über mehrere Messkanäle bewerkstelligt.

Coriolis-Massedurchflussmessgeräte eignen sich nicht nur zur Bestimmung eines Massedurchflusses, vielmehr können sie auch beispielsweise zur Bestimmung der Fluiddichte und der Viskosität des Mediums verwendet werden, genau so wie sie auch zur Erfassung von Diagnoseparametern geeignet sind, wie beispielsweise die Erfassung einer mehrphasigen Strömung oder die Erfassung von Ablagerungen. Auch hinsichtlich dieser Größen besteht ein starkes Interesse an einer möglichst präzisen und vor allem dauerhaft präzisen Erfassung der Messwerte. Der Wunsch nach einer gesicherten präzisen Messung wird nicht zuletzt auch durch sicherheitstechnische Überlegungen motiviert, beispielsweise um bestimmte Sicherheitsanforderungsstufen - Safety-Integrity Level (SIL) zu erreichen -.

Es ist daher Aufgabe der vorliegenden Erfindung, ein Verfahren zum Betreiben eines Coriolis-Massedurchflussmessgeräts und ein entsprechendes Coriolis-Massedurchflussmessgerät anzugeben, das eine Erfassung der relevanten Messgrößen oder Diagnoseparameter mit erhöhter Genauigkeit und insbesondere sicher gestattet.

Das erfindungsgemäße Verfahren zum Betreiben eines Coriolis-Massedurchflussmessgeräts, bei dem die zuvor hergeleitete und aufgezeigte Aufgabe gelöst ist, ist gekennzeichnet durch die Merkmale des Kennzeichnungsteils von Patentanspruch 1, also unter anderem dadurch, dass die Steuer- und Auswerteeinheit zumindest mittelbar aus den über die Messkanäle übertragenen Primärmesssignalen ratiometrisch wenigstens eine abgeleitete Sekundärgröße ($\dot{m}$) berechnet, wobei die interessierenden Primärmesssignale wechselnd über die verschiedenen Messkanäle der Steuer-und Auswerteeinheit zugeleitet werden und aus den über die verschiedenen Messkanäle erhaltenen verschiedenen Werten für die übertragenen Primärmesssignale Ausgleichswerte der übertragenen Primärmesssignale berechnet werden und die Ausgleichswerte der Berechnung der abgeleiteten Sekundärgröße zugrunde gelegt werden.

Erfindungsgemäß ist erkannt worden, dass zur Erzielung einer hohen Messgenauigkeit nicht nur in unmittelbarem Zusammenhang mit den konstruktiven Elementen des Coriolis-Massedurchflussmessgeräts stehenden Größen von Interesse sind, sondern vielmehr auch die Erfassung und Verarbeitung der messtechnisch aufzunehmenden und interessierenden Primärmesssignale sowie deren signalmäßige Übertragung von großer Bedeutung sind. Die eingangs beschriebenen hohen Genauigkeiten können nur dann erreicht werden, wenn im Falle der Bestimmung des Massedurchflusses die massestrombedingte Phasenverschiebung nicht durch eine von den Messkanälen verursachte Phasenverschiebung überdeckt und beeinträchtigt wird. Das kann beispielsweise bedeuten, dass die durch die Messkanäle bedingte Phasenverschiebung nicht größer als zum Beispiel 0,5 μrad sein darf. Eine Stabilität der Messkanäle von beispielsweise 0,5 μrad kann jedoch auf herkömmlichem Wege nur durch ganz erheblichen konstruktiven und kostenintensiven Aufwand zur strengen Einhaltung von Referenzbedingen und auch dann nur für sehr kleine Zeiten - im Sekundenbereich - gewährleistet werden, was selbstverständlich unbefriedigend ist. Das erfindungsgemäße Verfahren zielt darauf ab, die interessierenden - also die zur Berechnung der abgeleiteten Sekundärgröße erforderlichen - Primärmesssignale wechselnd über die verschiedenen Messkanäle zu leiten und der Steuer- und Auswerteeinheit zuzuleiten, so dass beispielsweise das interessierende erste Primärmesssignal zeitweise über einen ersten Messkanal geleitet wird und zeitweise über einen zweiten Messkanal geleitet wird und ferner ein zweites interessierendes Primärmesssignal zeitweise über den zweiten Messkanal und zeitweise über den ersten Messkanal geleitet wird. Dies hat zur Folge, dass das Übertragungsverhalten der verschiedenen Messkanäle sich gleichermaßen auf die verschiedenen interessierenden Primärmesssignale auswirkt und sich in den am Ausgang der Messkanäle erhaltenen Werten für die übertragenen Primärmesssignale niederschlägt. Diese nach Durchlaufen der verschiedenen Messkanäle erhaltenen Werte für die übertragenen Primärmesssignale werden dann zur Berechnung von Ausgleichswerten verwendet, die einen numerischen Ausgleich zwischen den verschiedenen Werten für die übertragenen Primärmesssignale herstellen. Mit den so erhaltenen Ausgleichswerten wird dann die Berechnung der abgeleiteten Sekundärgröße durchgeführt.

Bei den interessierenden Primärmesssignalen kann es sich beispielsweise um die Geschwindigkeitssignale der Schwingungsaufnehmer handeln, wobei der erste Schwingungsaufnehmer im Bereich der Einlaufseite des Messrohres vorgesehen ist und der zweite Schwingungsaufnehmer im Bereich der Auslaufseite des Messrohrs vorgesehen ist. Ein besonders vorteilhafter Effekt hinsichtlich der Reduzierung eines Messfehlers ergibt sich dann, wenn die abgeleitete Sekundärgröße - typischerweise der Massedurchfluss - ratiometrisch aus den übertragenen Primärmesssignalen bzw. aus den Ausgleichswerten der übertragenen Primärmesssignale berechnet wird, also durch Bildung des Verhältnisses von mathematischen Ausdrücken in den Ausgleichswerten, wobei die Ausgleichswerte aufgrund ihrer Berechnung die gleiche Störungsüberlagerung aufweisen. Im Fall der Bestimmung des Massedurchflusses kann der Massedurchfluss beispielsweise ratiometrisch durch die Bildung des Quotienten aus der Differenz der Primärmesssignale einerseits und der Summe der Primärmesssignale andererseits berechnet werden; dies wird unten im Rahmen der Figurenbeschreibung gleichungsmäßig ausführlich erläutert.

Die Ausgleichswerte der übertragenen Primärmesssignale werden durch Mittelwertbildung aus den über die verschiedenen Messkanäle erhaltenen verschiedenen Werte für die übertragenen Primärmesssignale berechnet, insbesondere durch Bildung des arithmetischen Mittelwertes.

In einer weiteren Ausgestaltung des erfindungsgemäßen Verfahrens werden die interessierenden Primärmesssignale wechselnd über die verschiedenen Messkanäle der Steuer- und Auswerteeinheit zugeleitet, so dass die verschiedenen Messkanäle alternierend mit der Übertragung verschiedener interessierender Primärmesssignale befasst sind. Bei einer alternativen Ausgestaltung des Verfahrens wird je ein interessierendes Primärmesssignal gleichzeitig über verschiedene Messkanäle zu der Steuer- und Auswerteeinheit übertragen, so dass gleichzeitig über verschiedene Messkanäle übertragene und erhaltene Werte für das jeweils eine übertragene Primärmesssignal vorliegen und aus diesen quasi gleichzeitig gewonnenen Werten für die übertragenen Primärmesssignalen Ausgleichswerte berechnet werden können.

Vorzugsweise dauert die Messperiode, während der ein bestimmtes Primärmesssignal über einen Messkanal übertragen wird, so lange an, bis Transienten des Übertragungsverhaltens des Messkanals abgeklungen sind. Dadurch wird bewirkt, dass die erhaltenen verschiedenen Werte für die übertragenen Primärmesssignale wenig streuen, insbesondere dann nämlich wenig streuen, wenn die verschiedenen Werte für die übertragenen Primärmesssignale zeitlich aufeinanderfolgend erhalten werden. Weitere Fehler können dadurch vermieden werden, dass die ersten Messwerte nach Umschalten eines Messkanals verworfen werden, wodurch automatisch ungewünschte transiente Vorgänge außer Betracht bleiben.

Als ganz besonders vorteilhaft hat sich die Ausgestaltung des erfindungsgemäßen Verfahrens herausgestellt, bei der wenigstens ein Messkanal mit wenigstens einem bekannten Referenzsignal direkt beaufschlagt wird, das Messkanal-Antwortsignal des beaufschlagten Messkanals erfasst wird und bei der die Übertragungsfunktion des Messkanals anhand des bekannten Referenzsignals und anhand des erfassten Messkanal-Antwortsignals bestimmt wird. Dies ist deshalb vorteilhaft, weil das identifizierte Übertragungsverhalten des Messkanals nachfolgend zu einer weiteren Korrektur des Übertragungsverhaltens der Messkanäle verwendet werden kann. Wenn es heißt, dass das Referenzsignal bekannt ist, dann ist damit gemeint, dass es an der Stelle seiner originären Erzeugung bekannt ist, also beispielsweise in der Steuer- und Auswerteeinheit - beispielsweise einem DSP -, wo es generiert wird und deshalb dort als exakt bekannt angesehen werden darf. Als Referenzsignal wird in einer bevorzugten Ausgestaltung einfach das Anregungssignal für das Messrohr verwendet.

Eine weitere besonders vorteilhafte Ergänzung des erfindungsgemäßen Verfahrens besteht darin, dass wenigstens ein Anregungskanal mit wenigstens einem bekannten Referenzsignal direkt beaufschlagt wird, das Antwortsignal des beaufschlagten Anregungskanals erfasst wird und die Übertragungsfunktion des Anregungskanals anhand des bekannten Referenzsignals und anhand des erfassten Anregungskanal-Antwortsignals identifiziert wird. Auch hier lässt sich das Wissen über das Übertragungsverhalten des identifizierten Anregungskanals zu einer Messwertkorrektur heranziehen.

Das bekannte Referenzsignal wird von der Steuer- und Auswerteeinheit ausgegeben und im weiteren Verlauf durch das Übertragungsverhalten der nachgeordneten Komponenten verändert, insgesamt also durch das Übertragungsverhalten des verwendeten Anregungskanals und des verwendeten Messkanals. Ein Abgleich von Kanälen erfolgt dann praktisch auf den so verwendeten Referenzkanal.

Mit der identifizierten Übertragungsfunktion des Messkanals oder/und mit der identifizierten Übertragungsfunktion des Anregungskanals wird vorzugsweise das tatsächliche Übertragungsverhalten des Messkanals oder/und das tatsächliche Übertragungsverhalten des Anregungskanals - rechnerisch - korrigiert. Vorzugsweise geschieht diese Korrektur im Frequenzbereich, indem nämlich das jeweilige von der Steuer- und Auswerteeinheit empfangene übertragene Signal in orthogonale Komponenten zerlegt wird, der Frequenzgang der identifizierten Übertragungsfunktion des Messkanals oder des Anregungskanals für die aktuelle Anregungsfrequenz invertiert wird und die Sinus- und Kosinusfunktion der sich ergebenden invertierten Phase berechnet wird und mit Hilfe des invertierten Amplitudengangs zwei Korrekturfaktoren berechnet werden, mit denen die gemessenen orthogonalen Komponenten korrigiert werden.

Das zuvor beschriebene Verfahren ist umsetzbar bei einem Coriolis-Massedurchflussmessgerät mit wenigstens einem von einem Medium durchströmbaren Messrohr, wenigstens einem Schwingungserzeuger, wenigstens einem ersten Schwingungsaufnehmer, wenigstens einem zweiten Schwingungsaufnehmer und mit wenigstens einer Steuer- und Auswerteeinheit dadurch gelöst, dass eine Multiplexereinrichtung mit n+r Eingängen und m Ausgängen vorgesehen ist, n Eingänge der Multiplexereinrichtung mit n Primärsignalen beaufschlagbar sind, r Eingänge der Multiplexereinrichtung mit r Referenzsignalen beaufschlagbar sind, wobei m > 1, n > 1 und r > 1 gilt, und die m Ausgänge der Multiplexereinrichtung unmittelbar oder mittelbar über Filtereinrichtungen mit Eingängen der Steuer- und Auswerteeinheit verbunden sind, so dass über die Multiplexereinrichtung wenigstens zwei umschaltbare Messkanäle realisiert sind, wobei die Steuer- und Auswerteeinheit ganz konkret so eingerichtet ist, dass im Betrieb das zuvor beschriebene Verfahren ausgeführt wird.

Diese Anordnung ermöglicht es, n Primärmesssignale und r Referenzsignale wechselnd auf m Ausgänge der Multiplexereinrichtung zu schalten, wobei ein Primärmesssignal oder ein Referenzsignal auf verschiedene Ausgänge der Multiplexereinrichtung gleichzeitig durchgeschaltet werden kann, so dass das Primärmesssignal oder das Referenzsignal über mehr als einen Messkanal übertragen wird. Dabei unterliegen die über verschiedene Messkanäle übertragenen gleichen Primärmesssignale den gleichen unvermeidbaren Störungen der beteiligten Messkanäle, also beispielsweise Gleichtakt- als auch Gegentaktstörungen der Messkanäle.

Durch die weiteren Schritte des erfindungsgemäßen Verfahrens zum Betreiben eines Coriolis-Massedurchflussmessgeräts - Mittelwertbildung der erhaltenen verschiedenen Werte für die übertragenen Primärmesssignale und Subtraktion der Mittelwerte der verschiedenen Primärmesssignale - kann die gesuchte abgeleitete Sekundärgröße, speziell der Massestrom, unabhängig von Störungen der Messkanäle ermittelt werden. Das Multiplexen der Mess- und Antriebskanäle ermöglicht sowohl den Abgleich der Messkanäle und der Anregungskanäle aufeinander als auch die störungsfreie Bestimmung der Sekundärgrößen. Unter dem Abgleich der Kanäle ist zu verstehen, dass die Kanäle so beeinflusst werden, dass sie gleiches Übertragungsverhalten aufweisen, also zu gleichen Messwerten führen, unabhängig davon, ob absolut gesehen ein - aufgrund des Abgleichs gleicher - Messfehler vorliegt. Diese Messfehler wirken sich jedenfalls dann nicht mehr aus, wenn der Bestimmung der Ausgleichswerte eine Differenzbildung und/oder eine Quotientenbildung der aus den verschiedenen abgeglichenen Messkanälen erhaltenen Werte zu Grunde liegt.

Bevorzugt wird das zuvor beschriebene Verfahren verwendet im Zusammenhang mit Coriolis-Massedurchflussmessgeräten, die wenigstens drei Messkanäle aufweisen. Dann stehen immer zwei Messkanäle für die eigentliche Messung zur Verfügung, während der jeweils verbleibende Messkanal identifiziert werden kann. Die so gewonnene Redundanz ist insbesondere auch von Vorteil zur Erfüllung von SIL-Sicherheitsanforderungsstufen.

Im Einzelnen gibt es nun verschiedene Möglichkeiten, das erfindungsgemäße Verfahren zum Betreiben eines Coriolis-Massedurchflussmessgeräts auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen

Fig. 1    eine schematische Darstellung eines Coriolis-Massedurchflussmessgeräts zur Erläuterung des erfindungsgemäßen Verfahrens zum Betreiben eines Coriolis-Massedurchflussmessgeräts,

Fig. 2    eine weitere schematische Darstellung eines Coriolis-Massedurchflussmessgeräts,

Fig. 3    den Amplitudengang und den Phasengang eines identifizierten Messkanals, den Frequenzgang eines Korrekturgliedes und einen korrigierter Frequenzgang eines Messkanals und

Fig. 4    ein Blockschaltbild zur Erläuterung der Korrektur des Übertragungsverhaltens eines Messkanals im Frequenzbereich.

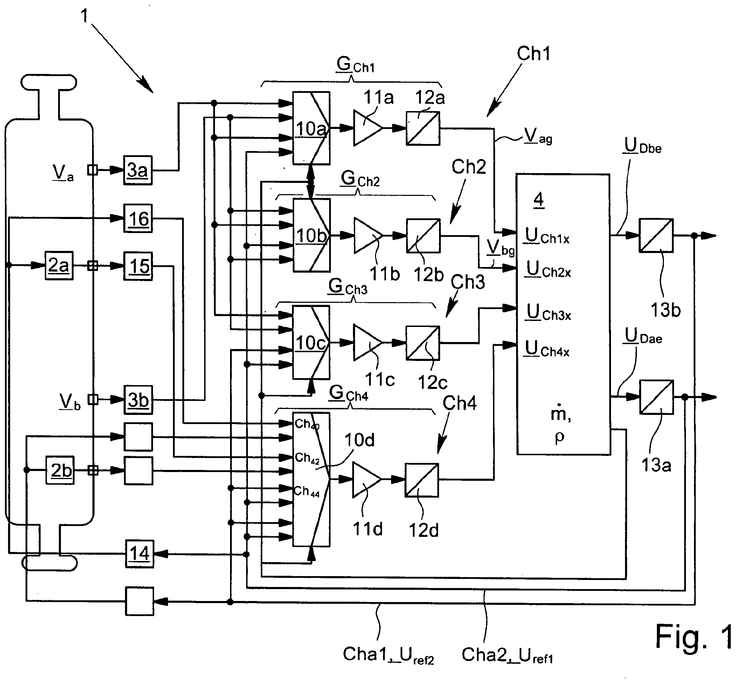

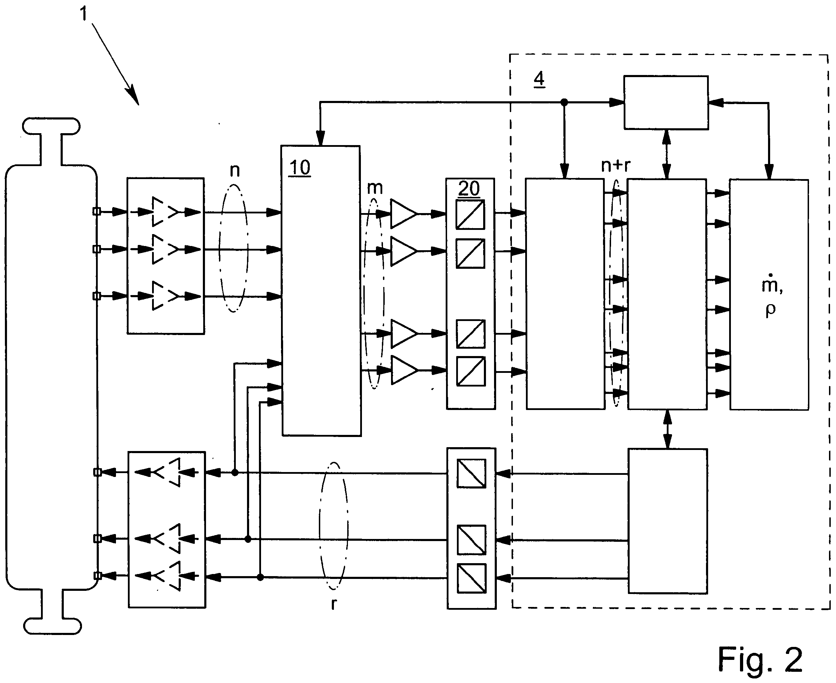

In den Figuren 1 und 2 ist zunächst ganz schematisch dargestellt ein Coriolis-Massedurchflussmessgerät 1, das - nicht dargestellt - ein von einem Medium durchströmbares Messrohr aufweist und zwei Schwingungserzeuger 2a, 2b sowie einen ersten Schwingungsaufnehmer 3a und einen zweiten Schwingungsaufnehmer 3b (Fig. 1). Die Schwingungserzeuger 2a, 2b werden beispielsweise durch durchstrombare Spulen mit einem permanenten Magneten gebildet, so dass bei Beaufschlagung der Spulen mit einem Strom eine Kraft auf das Messrohr ausgeübt wird. Ferner weist das Coriolis-Massedurchflussmessgerät 1 eine Steuer- und Auswerteeinheit 4 auf, wobei durch die Steuer- und Auswerteeinheit 4 Anregungssignale $\underline{U}_{Dae}$, $\underline{U}_{Dbe}$ erzeugt werden, die jeweils über einen Anregungskanal Chal, Cha2 dem jeweiligen Schwingungserzeuger 2a, 2b zugeleitet werden. Die Steuer- und Auswerteeinheit 4 empfängt darüber hinaus über einen ersten Messkanal Ch1 von dem ersten Schwingungsaufnehmer 3a ein erstes interessierendes Primärmesssignal $\underline{V}_a$, und die Steuer- und Auswerteeinheit 4 empfängt ferner über wenigstens einen zweiten Messkanal Ch2 von dem zweiten Schwingungsaufnehmer 3b ein zweites interessierendes Primärmesssignal $\underline{V}_b$. Bei den interessierenden Primärmesssignalen $\underline{V}_a$, $\underline{V}_b$ handelt es sich hier um die von den Schwingungsaufnehmern 3a, 3b erfassten Geschwindigkeitssignale der Messrohrbewegung.

Die Komponenten des in Fig. 1 dargestellten Coriolis-Massedurchflussmessgerätes 1 werden vorliegend so betrieben, dass die Steuer- und Auswerteeinheit 4 mittelbar aus den über die Messkanäle Ch1, Ch2 übertragenen Primärmesssignalen $\underline{V}_{ag}$, $\underline{V}_{bg}$, ratiometrisch eine abgeleitete Sekundärgröße in Form des Massedurchflusses $\dot{m}$ berechnet, wobei die interessierenden Primärmesssignale $\underline{V}_a$, $\underline{V}_b$ wechselnd über die verschiedenen Messkanäle Ch1, Ch2 der Steuer- und Auswerteeinheit 4 zugeleitet werden. Aus den über die verschiedenen Messkanäle Ch1, Ch2 erhaltenen verschiedenen Werten $\underline{V}_{ag1}$, $\underline{V}_{ag2}$ und $\underline{V}_{bg1}$, $\underline{V}_{bg2}$ für die übertragenen Primärmesssignale $\underline{V}_{ag}$, $\underline{V}_{bg}$ werden dann Ausgleichswerte $\underline{V}_{am}$, $\underline{V}_{bm}$ der übertragenen Primärmesssignale $\underline{V}_{ag}$, $\underline{V}_{bg}$ berechnet. $\underline{V}_{agn}$ bezeichnet hier den über Messkanal Chn erhaltenen und gemessenen Wert des interessierenden Primärmesssignals $\underline{V}_a$. Die berechneten Ausgleichswerte $\underline{V}_{am}$ und $\underline{V}_{bm}$ werden dann für die Berechnung der abgeleiteten Sekundärgröße - vorliegend des Massedurchflusses $\dot{m}$ - zugrunde gelegt.

Bei der Steuer- und Auswerteeinheit 4 handelt es sich im vorliegenden Fall um einen digitalen Signalprozessor (DSP), bei dem verschiedene signalverarbeitende Funktionseinheiten in einem Bauteil integriert sind. Selbstverständlich kann auch ein diskreter hardwaremäßiger Aufbau gewählt werden, darauf kommt es bei der vorliegenden Erfindung nicht an.

Das Problem des sich kurz-, mittel- und/oder langfristig verändernden Übertragungsverhaltens der Messkanäle Ch1, Ch2 für die Messgenauigkeit wird bei gleichungsmäßiger Betrachtung der Messstrecke deutlich. Die Veränderung des Übertragungsverhaltens der Messkanäle kann beispielsweise begründet sein in einer Temperaturabhängigkeit, durch Alterungsprozesse der eingesetzten Komponenten oder durch eine Frequenzabhängigkeit des Übertragungsverhaltens.

In dem in Fig. 1 dargestellten Ausführungsbeispiel wird die Geschwindigkeit des Messrohres an den Positionen a und b über die Schwingungsaufnehmer 3a, 3b in Form von zwei elektromagnetischen Sensoren erfasst und mittels der Messkanäle Ch1 und Ch2 mit den Übertragungsfunktionen $\underline{G}_{Ch1}$ und $\underline{G}_{Ch2}$ gemessen. Die Schwingungsaufnehmer 3a, 3b formen die erfasste Bewegung - interessierendes Primärmesssignal $\underline{V}_a$, $\underline{V}_b$ in entsprechende Spannungen $\underline{U}_{Va}$, $\underline{U}_{Vb}$ um. Die Bestimmungsgleichungen für die Messstrecke lauten demnach wie folgt:

$$\frac{V_{am}-V_{bm}}{V_{am}+V_{bm}} = \frac{V_{ag}-V_{bg}}{V_{ag}+V_{bg}} \quad \frac{\Delta V_{ag}-\Delta V_{bg}}{V_{ag}+V_{bg}} \cdot \frac{\Delta G_{Ch}}{G_{Ch}}$$

Gl. 1

Hierin bedeuten:

| | |
|---|---|
| $\underline{G}_{V_{a,b}}$ | Übertragungsfunktionen der Schwingungsaufnehmer 3a, 3b in Form von Geschwindigkeitssensoren an den Messrohrpositionen a und b, |
| $\underline{G}_{Ch1,2}$ | Übertragungsfunktionen der Messkanäle Ch1 und Ch2, |
| $\underline{V}_{a,b}$ | komplexe Geschwindigkeit des Messrohrs an den Positionen a und b, |
| $\underline{U}_{Va,Vb}$ | komplexe Spannungen der Schwingungsaufnehmer 3a, 3b, |
| $\underline{V}_{ag,bg}$ | komplexe Werte der über die Messkanäle gemessenen Geschwindigkeiten $V_a$, $V_b$ des Messrohrs und |
| $\underline{\omega}$ | Kreisfrequenz der Anregung. |

Im vorliegenden Fall wird das Messrohr mit einer Frequenz angeregt, die der Eigenresonanzkreisfrequenz der ersten Eigenform des Messrohrs entspricht. Bei einer Durchströmung des Messrohres stellt sich dann automatisch eine Schwingung des Messrohres in der zweiten Eigenform ein, wobei die einlaufseitige Schwingung und die auslaufseitige Schwingung des Messrohres in Abhängigkeit von dem Massedurchfluss phasenverschoben zueinander sind und die Phasenverschiebung bzw. die Zeitverzögerung zwischen den einlaufseitig und auslaufseitig erfassten Schwingungen ein direktes Maß für den Massedurchfluss darstellen. Die Phasendifferenz zwischen der einlaufseitigen und der auslaufseitigen Schwingung des Messrohres lässt sich im Falle der komplexen Geschwindigkeiten $\underline{V}_a$, $\underline{V}_b$ als Differenz dieser komplexwertigen Größen darstellen. Insgesamt wird im vorliegenden Fall der Massestrom ratiometrisch durch den folgenden Zusammenhang berechnet:

$$\dot{m} = f\left(\frac{\underline{V}_a(j\omega) - \underline{V}_b(j\omega)}{\underline{V}_a(j\omega) + \underline{V}_b(j\omega)}\right) = f\left(\frac{\underline{V}_2(j\omega)}{\underline{V}_1(j\omega)}\right) \qquad \text{Gl. 2}$$

Hierbei ist $\underline{V}_1$ die Geschwindigkeit der ersten Eigenform und $\underline{V}_2$ die Geschwindigkeit der zweiten Eigenform der Messrohrschwingung. Die Berechnung ist deshalb ratiometrisch, weil die Differenz der interessierenden Primärmesssignale dividiert wird durch die Summe der interessierenden Primärmesssignale, die bei Übertragung über die Messkanäle Ch1, Ch2 die gleichen Beeinflussungen erfahren.

Ganz konkret kann die Funktion zur Ermittlung des Massedurchflusses wie folgt implementiert werden, darauf kommt es jedoch im Detail nicht an:

$$\dot{m} = \text{Re}\left\{\frac{\underline{V}_2}{\underline{V}_1} \cdot \frac{1}{k_{CN} \cdot \underline{G}_2} - \frac{K}{k_{CN}}\right\}$$

$$\dot{m} = \text{Re}\left\{\frac{\text{Re}\{\underline{V}_2\} + j\,\text{Im}\{\underline{V}_2\}}{\text{Re}\{\underline{V}_1\} + j\,\text{Im}\{\underline{V}_1\}} \cdot \frac{1}{k_{CN} \cdot j \cdot \text{Im}\{\underline{G}_2\}}\right\} - \frac{k_V}{k_{CN}}$$

mit

$$\dot{m} = \frac{\text{Im}\{\underline{V}_2\} \cdot \text{Re}\{\underline{V}_1\} - \text{Re}\{\underline{V}_2\}\,\text{Im}\{\underline{V}_1\}}{\text{Re}\{\underline{V}_1\}^2 + \text{Im}\{\underline{V}_1\}^2} \cdot \frac{1}{k_{CN} \cdot \text{Im}\{\underline{G}_2\}} - \frac{k_V}{k_{CN}}$$

$\underline{V}_{12} = \underline{V}_a + \underline{V}_b$    Geschwindigkeit der ersten Eigenform,
$\underline{V}_2 = \underline{V}_a - \underline{V}_b$    Geschwindigkeit der zweiten Eigenform,
Re, Im       Real- bzw. Imaginärteil,
$k_{CN}$     Coriolis-Beiwert im Normalmode,
$\underline{G}_2$    Übertragungsfunktion der zweiten Eigenform des Messrohrs und
$k_V$        Beiwert der geschwindigkeitsproportionalen Kopplung der Messrohrhälften.

Nachfolgend wird zur Erhöhung der Übersichtlichkeit das komplexe Argument jω weggelassen. Die zunächst angestellte Betrachtung schildert die Messung für den Fall, dass jedes der beiden Geschwindigkeitssignale über immer denselben von zwei unabhängigen Messkanälen ermittelt werden, wie dies auch aus dem Stand der Technik bekannt ist; daran wird zunächst die der Erfindung zugrunde liegende Problematik deutlich.

Zunächst werden in Gl. 2 die interessierenden Primärmesssignale $\underline{V}_a$, $\underline{V}_b$ - die tatsächlichen Messrohrgeschwindigkeiten an den Positionen a und b des Messrohres - ersetzt durch die gemessenen Größen $\underline{V}_{ag}$ und $\underline{V}_{bg}$, es resultiert:

$$\frac{\underline{V}_a - \underline{V}_b}{\underline{V}_a + \underline{V}_b} = \frac{\underline{G}_{Vb} \cdot \underline{G}_{Ch2} \cdot \underline{V}_{ag} - \underline{G}_{Va} \cdot \underline{G}_{Ch1} \cdot \underline{V}_{bg}}{\underline{G}_{Vb} \cdot \underline{G}_{Ch2} \cdot \underline{V}_{ag} + \underline{G}_{Va} \cdot \underline{G}_{Ch1} \cdot \underline{V}_{bg}} \qquad . \qquad \text{Gl. 3}$$

Vereinfachend, jedoch ohne Beschränkung der Allgemeinheit, wird angenommen, dass die Übertragungsfunktionen der beiden Geschwindigkeitssensoren 3a, 3b gleich sind, die Übertragungsfunktionen also aufeinander abgeglichen sind, was durch selektive Auswahl der Schwingungsaufnehmer (Spule und Magnet) erreicht werden kann. Damit gilt:

$$\underline{G}_{V_a} = \underline{G}_{V_b} = \underline{G}_V \Rightarrow \frac{\underline{V}_a - \underline{V}_b}{\underline{V}_a + \underline{V}_b} = \frac{\underline{G}_{Ch2} \cdot \underline{V}_{ag} - \underline{G}_{Ch1} \cdot \underline{V}_{bg}}{\underline{G}_{Ch2} \cdot \underline{V}_{ag} + \underline{G}_{Ch1} \cdot \underline{V}_{bg}} \quad \text{Gl. 4}$$

Wenn das Übertragungsverhalten der beiden Messkanäle Ch1, Ch2 um $\Delta\underline{G}_{Ch}$ voneinander abweichen, dann gilt ferner:

$$\underline{G}_{Ch1} = \underline{G}_{Ch} + \Delta\underline{G}_{Ch}; \underline{G}_{Ch2} = \underline{G}_{Ch} - \Delta\underline{G}_{Ch}$$

$$\underline{G}_{Ch} = \frac{\underline{G}_{Ch1} + \underline{G}_{Ch2}}{2}; \Delta\underline{G}_{Ch} = \frac{\underline{G}_{Ch1} - \underline{G}_{Ch2}}{2}$$

Durch Einsetzen dieses Zusammenhangs in Gl. 4 resultiert:

$$\frac{\underline{V}_a - \underline{V}_b}{\underline{V}_a + \underline{V}_b} = \frac{\underline{G}_{Ch} \cdot (\underline{V}_{ag} - \underline{V}_{bg}) - \Delta\underline{G}_{Ch} \cdot (\underline{V}_{ag} + \underline{V}_{bg})}{\underline{G}_{Ch} \cdot (\underline{V}_{ag} + \underline{V}_{bg}) - \Delta\underline{G}_{Ch} \cdot (\underline{V}_{ag} - \underline{V}_{bg})} \quad \text{Gl. 5}$$

Da die Abweichung der Übertragungsfunktionen der Messkanäle kleiner ist als die identischen Teile der Übertragungsfunktion $\underline{G}_{Ch}$ der Messkanäle, gilt:

$$\underline{G}_{Ch} \cdot (\underline{V}_{ag} + \underline{V}_{bg}) \gg \Delta\underline{G}_{Ch} \cdot (\underline{V}_{ag} - \underline{V}_{bg}) \quad \text{Gl. 6}$$

womit sich Gl. 5 näherungsweise beschreiben lässt mit:

$$\frac{\underline{V}_a - \underline{V}_b}{\underline{V}_a + \underline{V}_b} \approx \frac{(\underline{V}_{ag} - \underline{V}_{bg})}{(\underline{V}_{ag} + \underline{V}_{bg})} - \frac{\Delta\underline{G}_{Ch}}{\underline{G}_{Ch}} \quad \text{Gl. 7}$$

Aus der vorgenannten Betrachtung ergibt sich, dass die Genauigkeit der Messung direkt von der relativen Abweichung des Übertragungsverhaltens der Messkanäle abhängt, wobei erfahrungsgemäß gilt

$$\frac{\Delta\underline{G}_{Ch}}{G} \approx 10^{-4}...10^{-2} \, ,$$

so dass die eingangs erwähnte gewünschte Genauigkeit ohne Weiteres nicht realisiert werden kann. Dieses Problem wird durch das erfindungsgemäße und nachfolgend beschriebene Verfahren gelöst. Die grundlegende Idee besteht zuächst darin, die interessierenden Primärmesssignale $\underline{V}_a$, $\underline{V}_b$ über unabhängige Messkanäle Ch1, Ch2 zu erfassen.
In dem in Fig. 1 dargestellten Ausführungsbeispiel werden zur Unterdrückung der Einflüsse der Messkanäle Ch1, Ch2 auf die Messung die interessierenden Primärmesssignale $\underline{V}_a$, $\underline{V}_b$ alternierend über die beiden Messkanäle Ch1, Ch2 gemessen, so dass für eine vordefinierte Zeit das Geschwindigkeitssignal $\underline{V}_a$ über den Messkanal Ch1 und anschließend über den Messkanal Ch2 gemessen wird. Genauso wird mit dem Geschwindigkeitssignal $\underline{V}_b$ verfahren, wobei vorzugsweise die Messdauer für die beiden Messkanäle Ch1, Ch2 gleich gewählt wird. Die so erhaltenen verschiedenen Werte $\underline{V}_{ag1}$, $\underline{V}_{ag2}$ werden dann herangezogen zur Berechnung eines Ausgleichswertes $\underline{V}_{am}$, vorliegend nämlich durch Bildung des arithmetischen Mittelwertes. Für das erste interessierende Primärmesssignal, also das Geschwindigkeitssignal $\underline{V}_a$ lauten dann die Messgleichungen (Gl. 8):

$$\left.\begin{array}{l} \underline{U}_{Va1} = \underline{G}_{Va} \cdot \underline{V}_{a1} \\ \underline{V}_{ag1} = \underline{G}_{Ch1} \cdot \underline{U}_{Va1} \\ \underline{U}_{Va2} = \underline{G}_{Va} \cdot \underline{V}_{a2} \\ \underline{V}_{ag2} = \underline{G}_{Ch2} \cdot \underline{U}_{Va2} \end{array}\right\} \Rightarrow \left\{\begin{array}{l} \underline{V}_{a1} = \dfrac{\underline{V}_{ag1}}{\underline{G}_{Ch1} \cdot \underline{G}_{Va}} \\[2ex] \underline{V}_{a2} = \dfrac{\underline{V}_{ag2}}{\underline{G}_{Ch2} \cdot \underline{G}_{Va}} \end{array}\right.$$

$$\text{Gl. 8}$$

$$\Rightarrow \underline{V}_{am} = \frac{\underline{V}_{a1} + \underline{V}_{a2}}{2} = \frac{\underline{V}_{ag1} \cdot \underline{G}_{Ch2} + \underline{V}_{ag2} \cdot \underline{G}_{Ch1}}{2\underline{G}_{Ch1} \cdot \underline{G}_{Ch2} \cdot \underline{G}_{Va}}$$

Entsprechendes gilt für das zweite interessierende Primärmesssignal, also das Geschwindigkeitssignal $\underline{V}_b$ Gl. 9:

$$\left.\begin{array}{l} \underline{U}_{Vb1} = \underline{G}_{Vb} \cdot \underline{V}_{b1} \\ V_{bg1} = \underline{G}_{Ch1} \cdot \underline{U}_{Vb1} \\ \underline{U}_{Vb2} = \underline{G}_{Vb} \cdot \underline{V}_{b2} \\ \underline{V}_{bg2} = \underline{G}_{Ch2} \cdot \underline{U}_{Vb2} \end{array}\right\} \Rightarrow \left\{\begin{array}{l} \underline{V}_{b1} = \dfrac{\underline{V}_{bg1}}{\underline{G}_{Ch1} \cdot \underline{G}_{Va}} \\[2ex] \underline{V}_{b2} = \dfrac{\underline{V}_{bg2}}{\underline{G}_{Ch2} \cdot \underline{G}_{Va}} \end{array}\right.$$

$$\text{Gl. 9}$$

$$\Rightarrow \underline{V}_{bm} = \frac{\underline{V}_{b1} + \underline{V}_{b2}}{2} = \frac{\underline{V}_{bg1} \cdot \underline{G}_{Ch2} + \underline{V}_{bg2} \cdot \underline{G}_{Ch1}}{2\underline{G}_{Ch1} \cdot \underline{G}_{Ch2} \cdot \underline{G}_{Vb}}$$

Wird mit diesen Ausgleichswerten $\underline{V}_{am}$, $\underline{V}_{bm}$ nun der Massestrom gemäß Gl. 2 berechnet, folgt:

$$\frac{\underline{V}_{am} - \underline{V}_{bm}}{\underline{V}_{am} + \underline{V}_{bm}} = \frac{\dfrac{\underline{V}_{ag1} \cdot \underline{G}_{Ch2} + \underline{V}_{ag2} \cdot \underline{G}_{Ch1}}{2\underline{G}_{Ch1} \cdot \underline{G}_{Ch2} \cdot \underline{G}_{Va}} - \dfrac{\underline{V}_{bg1} \cdot \underline{G}_{Ch2} + \underline{V}_{bg2} \cdot \underline{G}_{Ch1}}{2\underline{G}_{Ch1} \cdot \underline{G}_{Ch2} \cdot \underline{G}_{Vb}}}{\dfrac{\underline{V}_{ag1} \cdot \underline{G}_{Ch2} + \underline{V}_{ag2} \cdot \underline{G}_{Ch1}}{2\underline{G}_{Ch1} \cdot \underline{G}_{Ch2} \cdot \underline{G}_{Va}} + \dfrac{\underline{V}_{bg1} \cdot \underline{G}_{Ch2} + \underline{V}_{bg2} \cdot \underline{G}_{Ch1}}{2\underline{G}_{Ch1} \cdot \underline{G}_{Ch2} \cdot \underline{G}_{Vb}}}$$

Nach einigen Umformungen resultiert schließlich:

$$\frac{\underline{V}_{am} - \underline{V}_{bm}}{\underline{V}_{am} + \underline{V}_{bm}} =$$

$$\frac{\underline{V}_{ag1} \cdot \underline{G}_{Ch2} \cdot \underline{G}_{Vb} + \underline{V}_{ag2} \cdot \underline{G}_{Ch1} \cdot \underline{G}_{Vb} - \underline{V}_{bg1} \cdot \underline{G}_{Ch2} \cdot \underline{G}_{Va} - \underline{V}_{bg2} \cdot \underline{G}_{Ch1} \cdot \underline{G}_{Va}}{\underline{V}_{ag1} \cdot \underline{G}_{Ch2} \cdot \underline{G}_{Vb} + \underline{V}_{ag2} \cdot \underline{G}_{Ch1} \cdot \underline{G}_{Vb} + \underline{V}_{bg1} \cdot \underline{G}_{Ch2} \cdot \underline{G}_{Va} + \underline{V}_{bg2} \cdot \underline{G}_{Ch1} \cdot \underline{G}_{Va}}$$

Wenn wiederum davon ausgegangen wird, dass die Übertragungsfunktionen der beiden Schwingungsaufnehmer 3a, 3b durch selektive Auswahl der Sensorelemente (Spulen und Magnete) aufeinander abgeglichen sind, also gleich sind, ergibt sich:

$$\underline{G}_{Va} = \underline{G}_{Vb} \Rightarrow$$

$$\frac{\underline{V}_{am} - \underline{V}_{bm}}{\underline{V}_{am} + \underline{V}_{bm}} = \frac{\underline{V}_{ag1} \cdot \underline{G}_{Ch2} + \underline{V}_{ag2} \cdot \underline{G}_{Ch1} - \underline{V}_{bg1} \cdot \underline{G}_{Ch2} - \underline{V}_{bg2} \cdot \underline{G}_{Ch1}}{\underline{V}_{ag1} \cdot \underline{G}_{Ch2} + \underline{V}_{ag2} \cdot \underline{G}_{Ch1} + \underline{V}_{bg1} \cdot \underline{G}_{Ch2} + \underline{V}_{bg2} \cdot \underline{G}_{Ch1}}$$

$$\text{Gl. 10}$$

Aufgrund dieser Möglichkeit der Vereinfachung sind in dem dargestellten Ausführungsbeispiel der erste Schwingungsaufnehmer 3a und der zweite Schwingungsaufnehmer 3b so ausgeführt, dass sie gleiches mechanisches und elektrisches Übertragungsverhalten aufweisen, so dass der Abgleich durch Selektion bewirkt worden ist.

Aus den Zusammenhängen

$$\left. \begin{aligned} \underline{V}_{ag} &= \frac{\underline{V}_{ag1} + \underline{V}_{ag2}}{2} \\ \Delta \underline{V}_{ag} &= \frac{\underline{V}_{ag1} - \underline{V}_{ag2}}{2} \end{aligned} \right\} \Rightarrow \left\{ \begin{aligned} \underline{V}_{ag1} &= \underline{V}_{ag} + \Delta \underline{V}_{ag} \\ \underline{V}_{ag2} &= \underline{V}_{ag} - \Delta \underline{V}_{ag} \end{aligned} \right. \qquad \text{Gl. 11}$$

$$\left. \begin{aligned} \underline{V}_{bg} &= \frac{\underline{V}_{bg1} + \underline{V}_{bg2}}{2} \\ \Delta \underline{V}_{bg} &= \frac{\underline{V}_{bg1} - \underline{V}_{bg2}}{2} \end{aligned} \right\} \Rightarrow \left\{ \begin{aligned} \underline{V}_{bg1} &= \underline{V}_{bg} + \Delta \underline{V}_{bg} \\ \underline{V}_{bg2} &= \underline{V}_{bg} - \Delta \underline{V}_{bg} \end{aligned} \right. \qquad \text{Gl. 12}$$

und

$$\left. \begin{aligned} \underline{G}_{Ch} &= \frac{\underline{G}_{Ch1} + \underline{G}_{Ch2}}{2} \\ \Delta \underline{G}_{Ch} &= \frac{\underline{G}_{Ch1} - \underline{G}_{Ch2}}{2} \end{aligned} \right\} \Rightarrow \left\{ \begin{aligned} \underline{G}_{Ch1} &= \underline{G}_{Ch} + \Delta \underline{G}_{Ch} \\ \underline{G}_{Ch2} &= \underline{G}_{Ch} - \Delta \underline{G}_{Ch} \end{aligned} \right. \qquad \text{Gl. 13}$$

ergibt sich aus Gl. 10:

$$\frac{\underline{V}_{am} - \underline{V}_{bm}}{\underline{V}_{am} + \underline{V}_{bm}} = \frac{\underline{V}_{ag}\underline{G}_{Ch} - \Delta\underline{V}_{ag}\Delta\underline{G}_{Ch} - \underline{V}_{bg}\underline{G}_{Ch} + \Delta\underline{V}_{bg}\Delta\underline{G}_{Ch}}{\underline{V}_{ag}\underline{G}_{Ch} - \Delta\underline{V}_{ag}\Delta\underline{G}_{Ch} + \underline{V}_{bg}\underline{G}_{Ch} - \Delta\underline{V}_{bg}\Delta\underline{G}_{Ch}} \qquad \text{Gl. 14}$$

Da der gemeinsame Teil $\underline{G}_{Ch}$ der Übertragungsfunktionen der Messkanäle Ch1, Ch2 größer ist als die Abweichungen der Übertragungsfunktionen $\Delta\underline{G}_{Ch}$ der Messkanäle gilt:

$$V_{ag}G_{Ch} + V_{bg}G_{Ch} \gg \Delta V_{ag}\Delta G_{Ch} + \Delta V_{bg}\Delta G_{Ch}$$

Unter Berücksichtigung dieses Zusammenhangs folgt daher aus Gl. 14:

$$\frac{V_{am} - V_{bm}}{V_{am} + V_{bm}} = \frac{V_{ag} - V_{bg}}{V_{ag} + V_{bg}} - \frac{\Delta V_{ag} - \Delta V_{bg}}{V_{ag} + V_{bg}} \cdot \frac{\Delta G_{Ch}}{G_{Ch}} \qquad \text{Gl. 15}$$

Der Vergleich des Ergebnisses für die alternierende Nutzung von Messkanälen (Gl. 15) mit dem Ergebnis für die strikte Verwendung lediglich eines Messkanals für ein interessierendes Primärmesssignal zeigt, dass der Fehler durch abweichende Messkanalübertragungsfunktionen erheblich reduziert ist, nämlich reduziert ist um den Faktor:

$$\frac{\Delta V_{ag} - \Delta V_{bg}}{V_{ag} + V_{bg}}$$

Wenn die Änderungen der Geschwindigkeitssignale während der beiden alternierenden Messperioden 1 und 2 gleich oder die Änderungen überhaupt nur sehr klein sind, d. h. wenn $\Delta\underline{V}_{ag} \approx \Delta\underline{V}_{bg}$ gilt, dann resultiert eine Massedurchflussmessung, die gänzlich unabhängig von dem Übertragungsverhalten der Messkanäle ist:

$$\frac{\underline{V}_{am} - \underline{V}_{bm}}{\underline{V}_{am} + \underline{V}_{bm}} = \frac{\underline{V}_{ag} - \underline{V}_{bg}}{\underline{V}_{ag} + \underline{V}_{bg}} \qquad\qquad \text{Gl. 16}$$

so dass der auf Messgrößen basierende Massedurchfluss praktisch dem Massedurchfluss entspricht, der unter Verwendung der von den Messkanälen unbeeinflussten und interessierenden Primärmesssignale $\underline{V}_a$, $\underline{V}_b$ ermittelt würde; es gilt dann

$$\dot{m} = f\left(\frac{\underline{V}_a - \underline{V}_b}{\underline{V}_a + \underline{V}_b}\right) = f\left(\frac{\underline{V}_{ag} - \underline{V}_{bg}}{\underline{V}_{ag} + \underline{V}_{bg}}\right)$$

Die Umschaltung der Messkanäle wird in Fig. 1 wie auch in Fig. 2 durch Multiplexereinrichtungen 10 realisiert, die die Führung der interessierenden Primärmesssignale $\underline{V}_a$, $\underline{V}_b$ über die verschiedenen Messkanäle Ch1, Ch2 gestatten. Im Ausführungsbeispiel gemäß Fig. 1 besteht die Multiplexereinrichtung 10 aus mehreren separaten Multiplexern 10a, 10b, 10c, 10d.

Die Messperioden sind im Falle der in den Fig. 1 und 2 dargestellten Realisierungen mit Multiplexern durch den jeweiligen Multiplexer-Zyklus gegeben und werden im vorliegenden Fall im Millisekundenbereich gewählt. Damit ist gewährleistet, dass die Einschwingzeit der Multiplexerkanäle abgewartet und die Messungen durch die dynamischen Schalteigenschaften der Multiplexerkanäle nicht verfälscht werden. Die Wartezeit wird im vorliegenden Fall dadurch realisiert, dass direkt nach dem Umschalten eine vorbestimmte Anzahl der abgetasteten Messwerte nicht berücksichtigt wird.

Aus Gl. 15 geht hervor, dass eine Messunsicherheit dann entstehen kann, wenn die Dynamik der interessierenden Primärmesssignale in Form der Geschwindigkeitssignale während der beiden alternierenden Messperioden prozessbedingt groß ist (siehe zweiten Term in der Bestimmungsgleichung 15). Um auch einer solchen dynamischen Änderung begegnen zu können, ist darüber hinaus vorgesehen, die Übertragungsfunktionen $\underline{G}_{Ch1}$, $\underline{G}_{Ch2}$ der Messkanäle Ch1, Ch2 zu identifizieren, nämlich indem die Messkanäle Ch1, Ch2 mit wenigstens einem bekannten Referenzsignal $\underline{U}_{ref1}$, $\underline{U}_{ref2}$ direkt beaufschlagt werden und die Messkanal-Antwortsignale $\underline{U}_{Ch1}$, $\underline{U}_{Ch2}$ der beaufschlagten Messkanäle Ch1, Ch2 erfasst werden und die Übertragungsfunktionen der Messkanäle anhand der bekannten Referenzsignale $\underline{U}_{ref1}$, $\underline{U}_{ref2}$ und anhand der erfassten Messkanal-Antwortsignale $\underline{U}_{Ch1}$, $\underline{U}_{Ch2}$ identifiziert werden. Die Identifizierung der Übertragungsfunktionen $\underline{G}_{Ch1}$, $\underline{G}_{Ch2}$ der Messkanäle Ch1, Ch2 ermöglicht dann das tatsächliche Übertragungsverhalten der Messkanäle zu korrigieren. In den dargestellten Ausführungsbeispielen wird gleichermaßen verfahren mit der Übertragungsfunktion der Anregungskanäle. Die Referenzsignale $\underline{U}_{ref1}$, $\underline{U}_{ref2}$ sind deshalb bekannt, weil sie von der Steuer- und Auswerteeinheit 4 generiert und ausgegeben werden

Als Referenzsignal $\underline{U}_{ref1}$, $\underline{U}_{ref2}$ kann beispielsweise das aktuelle Antriebssignal bzw. die Antriebssignale verwendet werden, das praktisch eine gleich bleibende Frequenz und Amplitude aufweist. Die daraus gewonnen Informationen können für eine Identifikation ausreichend sein, wenn genug Wissen über das Übertragungsverhalten der Kanäle vorab existiert.

Die Identifikation des Übertragungsverhaltens der Messkanäle Ch1, Ch2 und der Übertragungsfunktion der Anregungskanäle Cha1, Cha2 geschieht vorliegen durch Anregung der Messkanäle bzw. der Anregungskanäle mit einem sinusförmigen Referenzsignal unter Variation von Frequenz und Amplitude, so dass die Frequenzgänge der Messkanäle Ch1, Ch2 und der Anregungskanäle Cha1, Cha2 bestimmt werden können.

Die Identifikation und die Korrektur eines Messkanals wird nachfolgend am Beispiel des Messkanals Ch1 erläutert. Bei der Identifikation wird folgende Übertragungsfunktion $\underline{G}_{Ch1}$ des Messkanals Ch1 mit der Frequenz f als Parameter zugrunde gelegt:

$$\underline{G}_{Ch1,ident}(f) = \frac{\underline{U}_{Ch1}(f)}{\underline{U}_{ref1}(f)} = A_{Ch1}(f) \cdot e^{j\varphi_{Ch1}(f)}$$

Dabei setzt sich unter Bezugnahme auf Fig. 1 die Übertragungsfunktion $\underline{G}_{Ch1}$ des Messkanals Ch1 aus den Teilübertragungsfunktionen des Multiplexers 10a, eines Messverstärkers 11a und eines A/D-Wandlers 12a zusammen. $\underline{U}_{ref1}$ ist die Referenzspannung am Ausgang eines D/A-Wandlers 13a und wird als bekannt angenommen, so dass die Unsicherheiten der Übertragungsfunktion des D/A-Wandlers bei der absoluten Identifikation der Antriebs- und Messkanäle erhalten bleiben, sie werden jedoch bei Abgleich der Antriebs- und Messkanäle aufeinander unwirksam.

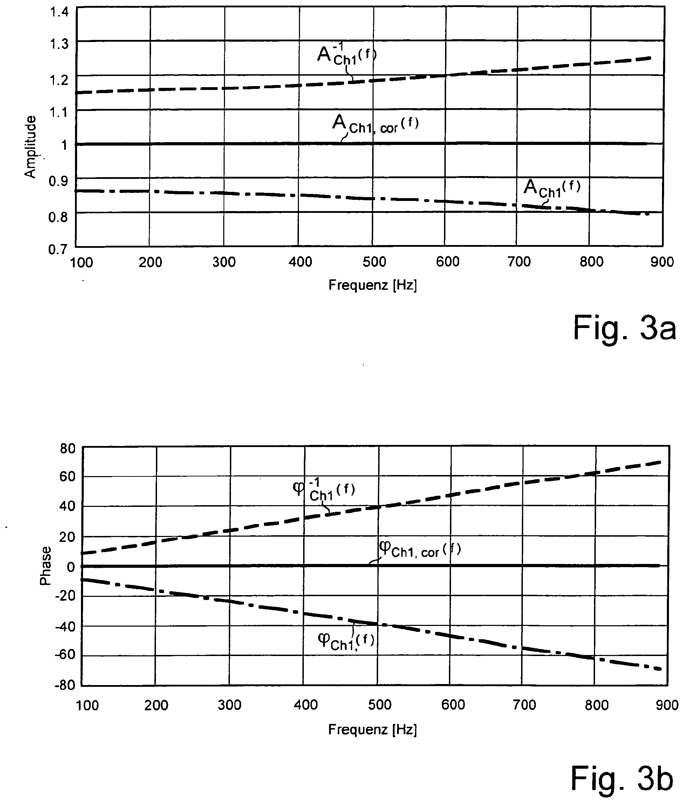

In den Fig. 3a ist der gemessene Amplitudengang $A_{Ch1}(f)$, der Korrektoramplitudengang $A^{-1}_{Ch1}(f)$ und der korrigierte Amplitudengang $A_{Ch1,cor}(f)$ des Messkanals Ch1 dargestellt, und in Fig. 3b ist der gemessene Phasengang $\varphi_{Ch1}(f)$, der Korrektorphasengang $\varphi^{-1}_{Ch1}(f)$ und der korrigierten Phasengang $\varphi_{Ch1,cor}(f)$ des Messkanals Ch1 dargestellt. Es ist ohne weiteres zu erkennen, dass durch die vorgenommene Korrektur das Übertragungsverhalten des Messkanals Ch1 praktisch neutralisiert worden ist, der Messkanal führt weder zu einer betragsmäßigen Veränderung des Messsignals noch zu einer Veränderung der Phase des Messsignals.

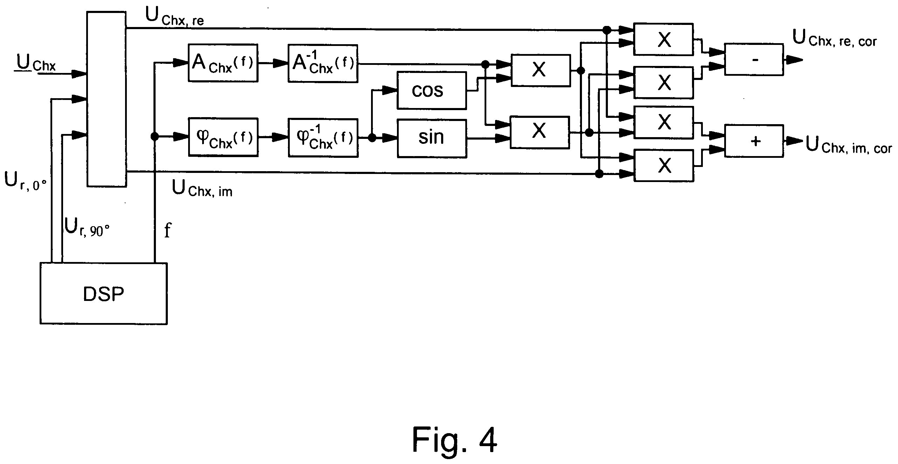

Die Korrektur wird bei den dargestellten Ausführungsbeispielen im Frequenzbereich durchgeführt und ist schematisch in Fig. 4 anhand eine Blockdiagramms dargelegt. Im Block $A_{Chx}(f)$ ist der Amplitudengang des Messkanals Chx als eine analytische Funktion abgelegt, vorliegend als ein Polynom dritter Ordnung in der Frequenz. Bei anderen Ausführungsbeispielen ist der Amplitudengang des Messkanals Ch1 als Tabelle hinterlegt. Im Block $\varphi_{Chx}(f)$ ist der Phasengang des Messkanals Chx entsprechend abgelegt.

In den daran anschließenden Blöcken wird der Frequenzgang für die aktuelle Anregungsfrequenz invertiert $A^{-1}_{Chx}(f), \varphi^{-1}_{Chx}(f)$ und werden die Cosinus- und Sinusfunktion der sich aus der Invertierung ergebenden Phase gebildet. Hieraus werden mit Hilfe des invertierten Amplitudengangs zwei Korrekturfaktoren, jeweils einer für den Realteil und einer für den Imaginärteil, berechnet und mit diesen der aktuell gemessenen Realteil $U_{Chx,re}$ und der aktuell gemessene Imaginärteil $U_{Chx,im}$ des Messkanals Chx korrigiert. Die Korrektur bzw. der Abgleich kann entsprechend für alle Anregungskanäle und Messkanäle durchgeführt werden.

Im vorliegenden Fall wird der Amplitudengang durch folgendes Polynom beschrieben:

$$A_{Chx}(f) = -1.1091 * 10^{-7} / Hz^2 * f^2 + 2.6444 * 10^{-6} / Hz * f + 0.08671.$$

Die korrigierte Amplitude ergibt sich bei einer bestimmten Frequenz f aus dem Quotienten aus der gemessenen Amplitude und $A_{chx}(f)$.

Ferner wird im vorliegenden Fall der Phasengang durch folgendes Polynom beschrieben:

$$\varphi_{Chx}(f) = 5.2519 \ rad/Hz^2 * 10^{-9} * f^2 - 0.0014 \ rad/Hz * f + 1.0661 * 10^{-4} \ rad,$$

wobei sich die korrigierte Phase aus der Differenz aus der gemessene Phase und $\varphi_{Chx}(f)$ ergibt.

Die Identifikation und die Korrektur bzw. der Abgleich der Anregungskanäle Cha1, Cha2 werden nachfolgend exemplarisch für den Anregungskanal Cha2 erläutert. Der Anregungskanal Cha2 besteht aus den folgenden Übertragungsfunktionen (Fig. 1):

$\underline{G}_{Da}$     Übertragungsfunktion des D/A-Wandlers 13a,
$\underline{G}_{La}$     Übertragungsfunktion eines Leistungsverstärkers 14,
$\underline{G}_{uia}$     Übertragungsfunktion der Antriebsspule 2a,
$\underline{G}_{ia}$     Übertragungsfunktion eines Messwiderstandes 15 für den Antriebsstrom und
$\underline{G}_{ua}$     Übertragungsfunktion eines Spannungsteilers 16 zur Messung der Spannung an der Antriebsspule

Es wird angenommen, dass der Strom durch die Antriebsspule 2a über den Spannungsabfall an einem Präzisionswiderstand 15 gemessen wird, so dass die Übertragungsfunktion $\underline{G}_{ia}$ als P-Glied beschrieben werden kann, deren Proportionalitätsfaktor bekannt ist. Das bedeutet: $\underline{G}_{ia}(f) = K_{ia}$.

Darüber hinaus wird angenommen, dass die Spannung an der Treiberspule 2a - Schwingungserzeuger 2a - über einen Präzisionsspannungsteiler 16 gemessen wird, dessen Übertragungsfunktion $\underline{G}_{ua}$ ebenfalls P-Verhalten aufweist und dessen Verstärkungsfaktor bekannt ist. Es gilt demnach: $\underline{G}_{ua}(f) = K_{ua}$.

Damit vereinfacht sich die Identifikation des Anregungskanals Gha2 auf die Identifikation der Übertragungsfunktionen $\underline{G}_{La}$ und $\underline{G}_{uib}$. Zur Bestimmung dieser Übertragungsfunktionen lassen sich nach Fig. 1 die folgenden Beziehungen aufstellen:

$$\underline{U}_{Dae1}(f) \cdot \underline{G}_{Da}(f) \cdot \underline{G}_{Ch4}(f) = \underline{U}_{Ch44}(f)$$

$$\underline{U}_{Dae2}(f) \cdot \underline{G}_{Da}(f) \cdot \underline{G}_{La}(f) \cdot \underline{G}_{uia}(f) \cdot \underline{G}_{ia}(f) \cdot \underline{G}_{Ch4}(f) = \underline{U}_{Ch42}(f)$$

$$\underline{U}_{Dae3}(f)\cdot\underline{G}_{Da}(f)\cdot\underline{G}_{La}(f)\cdot\underline{G}_{ua}(f)\cdot\underline{G}_{Ch4}(f)=\underline{U}_{Ch40}(f)$$

Die komplexen Größen $U_{Dae1}, U_{Dae2}, U_{Dae3}$ sind die über die Steuer- und Auswerteeinheit 4 in Form eines DSP (Digital Signal Processor) generierten bekannten Werte am Eingang des D/A-Wandlers 13a, und die komplexen Größen $U_{Ch44}, U_{Ch42}, U_{Ch40}$ sind die komplexen gemessen und damit bekannten Werte an den Messeingängen der Steuer- und Auswerteeinheit 4. Nach einigen Umformungen der obigen Gleichungen folgt, wobei wiederum das Argument f aus Gründen der Übersichtlichkeit weggelassen worden ist:

$$\underline{G}_{Da}\cdot\underline{G}_{Ch4}=\frac{\underline{U}_{Ch44}}{\underline{U}_{Dae1}}$$

$$\underline{G}_{La}\cdot\underline{G}_{uib}\cdot\underline{G}_{ia}=\frac{\underline{U}_{Ch42}}{\underline{U}_{Dae2}}\cdot\frac{\underline{U}_{Dae1}}{\underline{U}_{Ch44}}$$

$$\underline{G}_{La}\cdot\underline{G}_{ub}=\frac{\underline{U}_{Ch40}}{\underline{U}_{Dae3}}\cdot\frac{\underline{U}_{Dae1}}{\underline{U}_{Ch44}}$$

$$\Rightarrow \begin{cases} \underline{G}_{La}=\dfrac{\underline{U}_{Ch40}}{\underline{U}_{Dae3}}\cdot\dfrac{\underline{U}_{Dae1}}{\underline{U}_{Ch44}}\cdot\dfrac{1}{K_{ua}} \\[3mm] \underline{G}_{uib}=\dfrac{\underline{U}_{Ch42}}{\underline{U}_{Dae2}}\cdot\dfrac{\underline{U}_{Dae1}}{\underline{U}_{Ch44}}\cdot\dfrac{\underline{U}_{Dae3}}{\underline{U}_{Ch40}}\cdot\dfrac{\underline{U}_{Ch44}}{\underline{U}_{Dae1}}\cdot\dfrac{K_{ua}}{K_{ia}} \end{cases}$$

Damit lassen sich die Übertragungsfunktion $\underline{G}_{La}$ des Leistungsverstärkers 14 und die Übertragungsfunktion $\underline{G}_{iub}$ des Schwingungserzeugers 2a in Form einer Antriebsspule bestimmen.

Die Identifikation der Anregungskanäle Cha1, Cha2 kann vorliegend sowohl vor dem eigentlichen Messbetrieb als auch während des Einsatzes des Massedurchflussgerätes 1 durchgeführt werden. Hier wird die Identifikation und die Korrektur der Übertragungsfunktionen der Anregungskanäle Cha1, Cha2 vor dem Messbetrieb durchgeführt. Im Betrieb werden dann entsprechend nur die Änderungen der Übertragungsfunktionen der Anregungskanäle Cha1, Cha2 bei diskreten Frequenzen gemessen und korrigiert.

Bei anderen Realisierungen werden die Änderungen der Anregungskanäle während des Messbetriebs bei diskreten Frequenzen gemessen und vorbestimmte Parameter, beispielsweise der Widerstand der Antriebsspulen 2a, 2b identifiziert. Sie werden dann mit vorbestimmten Grenzwerten verglichen, und bei Über- bzw. Unterschreiten der Grenzwerte werden vorbestimmte Maßnahmen eingeleitet. Zu diesen Maßnahmen gehört beispielsweise eine erneute Identifikation und Korrektur der Anregungskanäle Cha1, Cha2 und/oder eine Fehlermeldung.

Die Erfassung der Frequenzgänge der Anregungskanäle Cha1, Cha2 und die Korrektur des Übertragungsverhaltens bzw. dessen Abgleich erfolgen entsprechend der bei den Messkanälen Ch1, Ch2 erläuterten Vorgehensweise. Die Identifikation der Anregungskanäle Cha1, Cha2 kann mit verschiedenen Frequenzen erfolgen, die auch nicht mit der Anregungsfrequenz übereinstimmen.

Die Identifikation der Anregungskanäle Cha1, Cha2 dient der Kompensation des Einflusses der Anregungskanäle Cha1, Cha2. Damit können zum einen die Parameter des Messrohres unabhängig von Eigenschaften der Anregungskanäle Cha1, Cha2 bestimmt werden und zum anderen können bevorzugte Arbeitspunkte präzise angefahren und gehalten werden. Die genaue Einstellung der Arbeitspunkte ist zum Beispiel vorteilhaft für die Genauigkeit einer mit dem Coriolis-Massedurchflussmessgerät durchgeführten Dichtemessung und für die Erzielung eines guten Signal-Rauschabstandes bei der Durchflussmessung.

In Fig. 2 ist schließlich schematisch ein weiteres Coriolis-Massedurchflussmessgerät 1 zur Durchführung des vorbeschriebenen Verfahrens dargestellt, wobei das Coriolis-Massedurchflussmessgerät 1 wiederum ein von einem Medium durchströmbares Messrohr, einen Schwingungserzeuger, einen ersten Schwingungsaufnehmer, einen zweiten Schwingungsaufnehmer und eine Steuer- und Auswerteeinheit 4 aufweist und eine Multiplexereinrichtung 10, die (n+r) Eingänge und m Ausgänge aufweist, wobei n Eingänge der Multiplexereinrichtung 10 mit n Primärsignalen beaufschlagbar sind und r Eingänge der Multiplexereinrichtung 10 mit r Referenzsignalen beaufschlagbar sind, wobei m > 1, n > 1 und r > 1 gilt, und wobei die m Ausgänge der Multiplexereinrichtung unmittelbar oder mittelbar über Filtereinrichtungen 20 mit Eingängen der Steuer- und Auswerteeinheit 4 verbunden sind, und wobei die Steuer- und Auswerteeinheit 4 ganz konkret so eingerichtet und programmiert ist, dass im Betrieb das zuvor erläuterte Verfahren ausgeführt wird. Der Einsatz der Multiplexereinrichtung 10 gestattet es, mehrere - im Einzelnen in Fig. 2 nicht, aber in Fig. 1 bereits dargestellte und erläuterte - Messkanäle (Ch1, Ch2, Chn) zu realisieren, die aufgrund der Funktion der Multiplexereinrichtung 10 umschaltbar sind.

Bei dem Coriolis-Massedurchflussmessgerät 1 gemäß Fig. 1 ist die Multiplexereinrichtung 1 aus mehreren separaten Multiplexern 10a, 10b, 10c, 10d realisiert, so dass für die Realisierung der Messkanäle Ch1, Ch2, Chn einerseits und für die Realisierung der Anregungskanäle Cha1, Cha2, Chan separate Multiplexer vorgesehen sind, was eine saubere Trennung zwischen unterschiedlich starken und unterschiedlich verrauschten Signalen ermöglicht.

**Patentansprüche**

1. Verfahren zum Betreiben eines Coriolis-Massedurchflussmessgeräts (1), wobei das Coriolis-Massedurchflussmessgerät (1) wenigstens ein von einem Medium durchströmbares Messrohr, wenigstens einen Schwingungserzeuger (2a, 2b), wenigstens einen ersten Schwingungsaufnehmer (3a), wenigstens einen zweiten Schwingungsaufnehmer (3b) und wenigstens eine Steuer- und Auswerteeinheit (4) aufweist, wobei dem Schwingungserzeuger (2a, 2b) von der Steuer- und Auswerteeinheit (4) über wenigstens einen Anregungskanal (Chal, Cha2) Anregungssignale ($\underline{U}_{Dae}$, $\underline{U}_{Dbe}$) zuleitbar sind, wobei der Steuer- und Auswerteeinheit (4) von dem ersten Schwingungsaufnehmer (3a) über wenigstens einen ersten Messkanal (Ch1) ein erstes interessierendes Primärmesssignal ($\underline{V}_a$) zuleitbar ist und der Steuer- und Auswerteeinheit (4) von dem zweiten Schwingungsaufnehmer (3b) über wenigstens einen zweiten Messkanal (Ch2) ein zweites interessierendes Primärmesssignal ($\underline{V}_b$) zuleitbar ist,
**dadurch gekennzeichnet,**
**dass** die Steuer- und Auswerteeinheit (4) mittelbar aus den über die Messkanäle (Ch1, Ch2, Chn) übertragenen Primärmesssignalen ($\underline{V}_{ag}$, $\underline{V}_{bg}$) ratiometrisch durch die Bildung des Quotienten aus der Differenz des ersten Primärmesssignals und des zweiten Primärmesssignals einerseits und der Summe des ersten Primärmesssignals und des zweiten Primärmesssignals andererseits wenigstens eine abgeleitete Sekundärgröße ($\dot{m}$) - typischerweise der Massedurchfluss - berechnet, wobei die interessierenden Primärmesssignale ($\underline{V}_a$, $\underline{V}_b$) wechselnd über die verschiedenen Messkanäle (Ch1, Ch2, Chn) der Steuer- und Auswerteeinheit (4) zugeleitet werden und aus den über die verschiedenen Messkanäle (Ch1, Ch2, Chn) erhaltenen verschiedenen Werten für das erste übertragene Primärmesssignal ($\underline{V}_{ag1}$, $\underline{V}_{ag2}$, $\underline{V}_{agn}$) und das zweite übertragene Primärmesssignal ($\underline{V}_{bg1}$, $\underline{V}_{bg2}$, $\underline{V}_{bgn}$) durch Mittelwertbildung für das erste übertragenen Primärmesssignale ($\underline{V}_{ag}$) und durch Mittelwertbildung für das zweite übertragenen Primärmesssignale ($\underline{V}_{bg}$) Ausgleichswerte ($\underline{V}_{am}$, $\underline{V}_{bm}$) der übertragenen Primärmesssignale berechnet werden und die Ausgleichswerte ($\underline{V}_{am}$, $\underline{V}_{bm}$) der Primärmesssignale an Stelle der Primärmesssignale ($\underline{V}_a$, $\underline{V}_b$) der Berechnung der abgeleiteten Sekundärgröße ($\dot{m}$) zugrunde gelegt werden, indem aus den erhaltenen Ausgleichswerten ($\underline{V}_{am}$, $\underline{V}_{bm}$) dann die Berechnung der abgeleiteten Sekundärgröße ($\dot{m}$) durchgeführt wird.

2. Verfahren nach Anspruch 1, **dadurch gekennzeichnet, dass** der Ausgleichswert ($\underline{V}_{am}$, $\underline{V}_{bm}$) durch Bildung des arithmetischen Mittelwertes aus den über die verschiedenen Messkanäle (Ch1, Ch2, Chn) erhaltenen verschiedenen Werten ($\underline{V}_{ag1}$, $\underline{V}_{ag2}$, $\underline{V}_{agn}$; $\underline{V}_{bg1}$, $\underline{V}_{bg2}$, $\underline{V}_{bgn}$) für die übertragenen Primärmesssignale ($\underline{V}_{ag}$, $\underline{V}_{bg}$) berechnet werden.

3. Verfahren nach Anspruch 1 oder 2, **dadurch gekennzeichnet, dass** die Messperiode, während der ein bestimmtes Primärmesssignal über einen Messkanal (Ch1, Ch2, Chn) übertragen wird, solange andauert, bis Transienten des Übertragungsverhaltens des Messkanals (Ch1, Ch2, Chn) abgeklungen sind.

4. Verfahren nach einem der Ansprüche 1 bis 3, **dadurch gekennzeichnet, dass** die ersten Messwerte nach Umschalten eines Messkanals (Ch1, Ch2, Chn) verworfen werden.

5. Verfahren nach einem der Ansprüche 1 bis 4, **dadurch gekennzeichnet, dass** wenigstens ein Messkanal (Ch1, Ch2, Chn) mit wenigstens einem bekannten Referenzsignal ($\underline{U}_{ref1}$) direkt beaufschlagt wird, das Messkanal-Antwortsignal ($\underline{U}_{Ch1}$) des beaufschlagten Messkanals (Ch1, Ch2, Chn) erfasst wird und die Übertragungsfunktion ($\underline{G}_{Ch1}$) des Messkanals (Ch1, Ch2, Chn) anhand des bekannten Referenzsignals ($\underline{U}_{ref1}$) und anhand des erfassten Messkanal-Antwortsignals ($\underline{U}_{Ch1}$) identifiziert wird.

6. Verfahren nach einem der Ansprüche 1 bis 5, **dadurch gekennzeichnet, dass** wenigstens ein Anregungskanal (Chal, Cha2) mit wenigstens einem bekannten Referenzsignal ($\underline{U}_{dae1}$, $\underline{U}_{dae2}$, $\underline{U}_{dae3}$) direkt beaufschlagt wird, das Antwortsignal ($\underline{U}_{ch1x}$, $\underline{U}_{ch2x}$, $\underline{U}_{ch3x}$, $\underline{U}_{ch4x}$,) des beaufschlagten Anregungskanals (Chal, Cha2) erfasst wird und die Übertragungsfunktion des Anregungskanals (Chal, Cha2) anhand des bekannten Referenzsignals ($\underline{U}_{dae1}$, $\underline{U}_{dae2}$, $\underline{U}_{dae3}$) und anhand des erfassten Anregungskanal-Antwortsignals ($\underline{U}_{ch1x}$, $\underline{U}_{ch2x}$, $\underline{U}_{ch3x}$, $\underline{U}_{ch4x}$,) identifiziert wird.

7. Verfahren nach Anspruch 5 oder 6, **dadurch gekennzeichnet, dass** mit der identifizierten Übertragungsfunktion des Messkanals (Ch1, Ch2, Chn) oder/und mit der identifizierten Übertragungsfunktion des Anregungskanals (Cha1, Cha2) das tatsächliche Übertragungsverhalten des Messkanals (Ch1, Ch2, Chn) oder/und das tatsächliche Übertragungsverhalten des Anregungskanals (Chal, Cha2) korrigiert wird.

8. Verfahren nach Anspruch 7, **dadurch gekennzeichnet, dass** das tatsächlichen Übertragungsverhalten des Messkanals (Ch1, Ch2) oder/und das tatsächliche Übertragungsverhalten des Anregungskanals (Chal, Cha2) im Frequenzbereich korrigiert wird/werden, indem das jeweilige von der Steuer- und Auswerteeinheit (4) empfangene übertragene Signal ($\underline{U}_{Chx}$) in orthogonale Komponenten ($U_{Chx,re}$, $U_{Chx,im}$) zerlegt wird, der Frequenzgang ($A_{Chx}(f)$,

$\varphi_{Chx}(f)$) der identifizierten Übertragungsfunktion ($\underline{G}_{Chx,ident}$) des Messkanals (Ch1, Ch2) oder Anregungskanals (Cha1, Cha2) für die aktuelle Anregungsfrequenz invertiert wird ($A^{-1}_{Chx}(f)$, $\varphi^{-1}_{Chx}(f)$) und die Sinus- und Kosinusfunktion der sich ergebenden invertierten Phase ($\varphi^{-1}_{Chx}(f)$) berechnet und mit Hilfe des invertierten Amplitudengangs ($A^{-1}_{Chx}(f)$) zwei Korrekturfaktoren ($U_{Chx,re,cor}$, $U_{Chx,im,cor}$) berechnet werden, mit denen die gemessenen orthogonalen Komponenten ($U_{Chx,re}$, $U_{Chx,im}$) korrigiert werden.

9. Verfahren nach einem der Ansprüche 5 bis 8, **dadurch gekennzeichnet, dass** als bekanntes Referenzsignal ($\underline{U}_{refx}$) das aktuelle Anregungssignal verwendet wird, oder dass als bekanntes Referenzsignal ($\underline{U}_{refx}$) Sinussignale mit wenigstens unterschiedlicher Frequenz, vorzugsweise auch mit unterschiedlicher Amplitude, verwendet werden und/oder als bekannte Referenzsignale ($\underline{U}_{refx}$) Rechtecksignale verwendet werden.

10. Verfahren nach einem der Ansprüche 5 bis 9, **dadurch gekennzeichnet, dass** die Identifikation der Übertragungs-funktion ($\underline{G}_{Chx,ident}$) des Messkanals oder/und der Übertragungsfunktion ($\underline{G}_{Chx,ident}$) des Anregungskanals durch Erfassung des Frequenzgangs erfolgt, insbesondere wobei Amplitudengang und Phasengang durch ein Polynom nachgebildet werden.

## Claims

1. Method for operating a Coriolis mass flow measuring device (1), whereby the Coriolis mass flow measuring device (1) has at least one measuring tube through which a medium flows, at least one oscillation generator (2a, 2b), at least one first oscillation sensor (3a), at least one second oscillation sensor (3b), and at least one control and analysis unit (4), whereby excitation signals ($\underline{U}_{Dae}$, $\underline{U}_{Dbe}$) can be routed via at least one excitation channel (Cha1, Cha2) to the oscillation generator (2a, 2b) of the control and analysis unit (4), whereby a first primary measuring signal ($\underline{V}_a$) of interest can be routed via at least one first measuring channel (Ch1) to the control and analysis unit (4) from the first oscillation sensor (3a), and a second primary measuring signal ($\underline{V}_b$) of interest can be routed via at least one second measuring channel (Ch2) to the control and analysis unit (4) from the second oscillation sensor (3b),
   **characterized in**
   **that** the control and analysis unit (4) ratiometrically calculates at least one derived secondary variable ($\dot{m}$) - typically the mass flow - at least indirectly from the primary measuring signals ($\underline{V}_{ag}$, $\underline{V}_{bg}$) transmitted via the measuring channels (Ch1, Ch2, Chn), by forming ratios of the difference of the first primary measuring signal and the second primary measuring signal, on the one hand, and the sum of the first primary measuring signal and the second primary measuring signal, on the other hand, wherein the primary measuring signals ($\underline{V}_a$, $\underline{V}_b$) of interest are routed alternately via the different measuring channels (Ch1, Ch2, Chn) to the control and analysis unit (4), and comparison values ($\underline{V}_{am}$, $\underline{V}_{bm}$) of the transmitted primary measuring signals are calculated from the different values for the first transmitted primary measuring signals ($\underline{V}_{ag1}$, $\underline{V}_{ag2}$, $\underline{V}_{agn}$) and the second transmitted primary signals ($\underline{V}_{bg1}$, $\underline{V}_{bg2}$, $\underline{V}_{bgn}$) that are obtained via the different measuring channels (Ch1, Ch2, Chn) by forming a mean value for the first transmitted primary signal ($\underline{V}_{ag}$) and by forming a mean value for the second transmitted primary signal ($\underline{V}_{bg}$), and the comparison values ($\underline{V}_{am}$, $\underline{V}_{bm}$) of the primary measuring signals are taken as a basis for calculating the derived secondary variable ($\dot{m}$) instead of the primary measuring signals ($\underline{V}_a$, $\underline{V}_b$), in that the calculation of the derived secondary variable ($\dot{m}$) is carried out using the received comparison values ($\underline{V}_{am}$, $\underline{V}_{bm}$).

2. Method according to claim 1, **characterized in that** the comparison values ($\underline{V}_{am}$, $\underline{V}_{bm}$) are calculated from the different values ($\underline{V}_{ag1}$, $\underline{V}_{ag2}$, $\underline{V}_{agn}$; $\underline{V}_{bg1}$, $\underline{V}_{bg2}$, $\underline{V}_{bgn}$) for the transmitted primary measuring signals ($\underline{V}_{ag}$, $\underline{V}_{bg}$) that are obtained via the different measuring channels (Ch1, Ch2, Chn) by forming the mean values, in particular by forming the arithmetic mean values.

3. Method according to claim 1 or 2, **characterized in that** the measuring period, during which a specific primary measuring signal is transmitted via a measuring channel (Ch1, Ch2, Chn), lasts until transients of the transmission behavior of the measuring channel (Ch1, Ch2, Chn) have subsided.

4. Method according to any one of claims 1 to 3, **characterized in that** the first measurement values after switching over a measuring channel (Ch1, Ch2, Chn) are discarded.

5. Method according to any one of claims 1 to 4, **characterized in that** at least one measuring channel (Ch1, Ch2, Chn) is directly exposed to at least one known reference signal ($\underline{U}_{ref1}$), the measuring channel response signal ($\underline{U}_{Ch1}$) of the exposed measuring channel (Ch1, Ch2, Chn) is ascertained, and the transmission function ($\underline{G}_{Ch1}$) of the measuring channel (Ch1, Ch2, Chn) is identified based on the known reference signal ($\underline{U}_{ref1}$) and based on the measuring channel response signal ($\underline{U}_{Ch1}$) that is ascertained.

6. Method according to any one of claims 1 to 5, **characterized in that** at least one excitation channel (Chal, Cha2) is directly exposed to at least one known reference signal ($\underline{U}_{dae1}$, $\underline{U}_{dae2}$, $\underline{U}_{dae3}$), the response signal ($\underline{U}_{ch1x}$, $\underline{U}_{ch2x}$, $\underline{U}_{ch3x}$, $\underline{U}_{ch4x}$) of the exposed excitation channel (Chal, Cha2) is ascertained, and the transmission function of the excitation channel (Chal, Cha2) is identified based on the known reference signal ($\underline{U}_{dae1}$, $\underline{U}_{dae2}$, $\underline{U}_{dae3}$) and based on the acquired excitation channel-response signal ($\underline{U}_{ch1x}$, $\underline{U}_{ch2x}$, $\underline{U}_{ch3x}$, $\underline{U}_{ch4x}$).

7. Method according to claim 5 or 6, **characterized in that** the actual transmission behavior of the measuring channel (Ch1, Ch2, Chn) and/or the actual transmission behavior of the excitation channel (Chal, Cha2) is/are corrected with the identified transmission function of the measuring channel (Ch1, Ch2, Chn) and/or with the identified transmission function of the excitation channel (Chal, Cha2).

8. Method according to claim 7, **characterized in that** the actual transmission behavior of the measuring channel (Ch1, Ch2) and/or the actual transmission behavior of the excitation channel (Chal, Cha2) is/are corrected in the frequency range by the respective transmitted signal ($\underline{U}_{Chx}$) received by the control and analysis unit (4) being separated into orthogonal components ($U_{Chx,re}$, $U_{Chx,im}$), the frequency response ($A_{Chx}(f)$, $j_{Chx}(f)$) of the identified transmission function ($\underline{G}_{Chx,ident}$) of the measuring channel (Ch1, Ch2) or the excitation channel (Chal, Cha2) for the prevailing excitation frequency being inverted ($A^{-1}_{Chx}(f)$, $j^{-1}_{Chx}(f)$), and the sine and cosine functions of the inverted phase ($j^{-1}_{Chx}(f)$) that is produced being calculated, and two correction factors ($U_{Chx,re,cor}$, $U_{Chx,im,cor}$), with which the measured orthogonal components ($U_{Chx,re}$, $U_{Chx,im}$) are corrected, being calculated using the inverted amplitude response ($A^{-1}_{Chx}(f)$).

9. Method according to any one of claims 5 to 8, **characterized in that** the prevailing excitation signal is used as a known reference signal ($\underline{U}_{refx}$), or wherein sine signals with at least different frequency, preferably also with different amplitude, are used as known reference signal ($\underline{U}_{refx}$), and/or square-wave signals are used as known reference signals ($\underline{U}_{refx}$).

10. Method according to one of Claims 5 to 9, **characterized in that** the identification of the transmission function ($\underline{G}_{Chx,ident}$) of the measuring channel and/or the transmission function ($\underline{G}_{Chx,ident}$) of the excitation channel is/are done by ascertaining the frequency response, in particular whereby amplitude response and phase response are recreated by a polynomial.

## Revendications

1. Procédé de mise en fonctionnement d'un débitmètre massique à effet Coriolis (1), dans lequel le débitmètre massique à effet Coriolis (1) comporte au moins un tube de mesure dans lequel un fluide peut s'écouler, au moins un générateur d'oscillations (2a, 2b), au moins un premier capteur d'oscillations (3a), au moins un deuxième capteur d'oscillations (3b) et au moins une unité de commande et d'évaluation (4), dans lequel des signaux d'excitation ($\underline{U}_{Dae}$, $\underline{U}_{Dbe}$) peuvent être délivrés au générateur d'oscillations (2a, 2b) par l'unité de commande et d'évaluation (4) par l'intermédiaire d'au moins un canal d'excitation (Cha1, Cha2), dans lequel un premier signal de mesure primaire ($\underline{V}_a$) intéressant peut être délivré à l'unité de commande et d'évaluation (4) par le premier capteur d'oscillations (3a) par l'intermédiaire d'au moins un premier canal de mesure (Ch1) et un deuxième signal de mesure primaire ($\underline{V}_b$) intéressant peut être fourni à l'unité de commande et d'évaluation (4) par le deuxième capteur d'oscillations (3b) par l'intermédiaire d'au moins un deuxième canal de mesure (Ch2),
**caractérisé en ce que** l'unité de commande et d'évaluation (4) calcule indirectement de manière ratiométrique au moins une grandeur secondaire dérivée ($\dot{m}$) - typiquement le débit massique à partir des signaux de mesure primaire ($\underline{V}_{ag}$, $\underline{V}_{bg}$) transmis par l'intermédiaire des canaux de mesure (Ch1, Ch2, Chn), en calculant le quotient de la différence entre le premier signal de mesure primaire et le deuxième signal de mesure primaire, d'une part, sur la somme du premier signal de mesure primaire et du deuxième signal de mesure primaire, d'autre part, dans lequel les signaux de mesure primaire ($\underline{V}_a$, $\underline{V}_b$) intéressants sont délivrés à l'unité de commande et d'évaluation (4) alternativement par l'intermédiaire des différents canaux de mesure (Ch1, Ch2, Chn), et des valeurs de compensation ($\underline{V}_{am}$, $\underline{V}_{bm}$) des signaux de mesure primaire transmis sont calculées à partir des différentes valeurs obtenues par l'intermédiaire des différents canaux de mesure (Ch1, Ch2, Chn) pour le premier signal de mesure primaire ($\underline{V}_{ag1}$, $\underline{V}_{ag2}$, $\underline{V}_{agn}$) transmis et pour le deuxième signal de mesure primaire ($\underline{V}_{bg1}$, $\underline{V}_{bg2}$, $\underline{V}_{bgn}$) transmis en calculant la moyenne du premier signal de mesure primaire ($\underline{V}_{ag}$) transmis et en calculant la moyenne du deuxième signal de mesure primaire ($\underline{V}_{bg}$) transmis et en basant le calcul des grandeurs secondaires dérivées ($\dot{m}$) sur les valeurs de compensation ($\underline{V}_{am}$,

$\underline{V}_{bm}$) des signaux de mesure primaire transmis au lieu des signaux de mesure primaire ($\underline{V}_a$, $\underline{V}_b$), le calcul de la grandeur secondaire dérivée ($\dot{\boldsymbol{m}}$) étant effectué ensuite à partir des valeurs de compensation ($\underline{V}_{am}$, $\underline{V}_{bm}$) obtenues.

2. Procédé selon la revendication 1, **caractérisé en ce que** les valeurs de compensation ($\underline{V}_{am}$, $\underline{V}_{bm}$) sont établies en calculant la valeur moyenne arithmétique des différentes valeurs ($\underline{V}_{ag1}$, $\underline{V}_{ag2}$, $\underline{V}_{agn}$ ; $\underline{V}_{bg1}$, $\underline{V}_{bg2}$, $\underline{V}_{bgn}$) obtenues par l'intermédiaire des différents canaux de mesure (Ch1, Ch2, Chn) pour les signaux de mesure primaire ($\underline{V}_{ag}$, $\underline{V}_{bg}$) transmis.

3. Procédé selon la revendication 1 ou 2, **caractérisé en ce que** la période de mesure au cours de laquelle un signal de mesure primaire déterminé est transmis par l'intermédiaire d'un canal de mesure (Ch1, Ch2, Chn) dure jusqu'à ce que les transitoires du profil de transmission du canal de mesure (Ch1, Ch2, Chn) aient disparu.

4. Procédé selon l'une des revendications 1 à 3, **caractérisé en ce que** les premières valeurs de mesure sont éliminées après un changement de canal de mesure (Ch1, Ch2, Chn).

5. Procédé selon l'une des revendications 1 à 4, **caractérisé en ce qu'**au moins un signal de référence connu ($\underline{U}_{ref1}$) attaque directement au moins un canal de mesure (Ch1, Ch2, Chn), le signal de réponse de canal de mesure ($\underline{U}_{Ch1}$) du canal de mesure (Ch1, Ch2, Chn) attaqué est détecté la fonction de transfert ($\underline{G}_{Ch1}$) du canal de mesure (Ch1, Ch2, Chn) est identifiée sur la base du signal de référence ($\underline{U}_{ref1}$) et sur la base du signal de réponse de canal de mesure ($\underline{U}_{Ch1}$) détecté.

6. Procédé selon l'une des revendications 1 à 5, **caractérisé en ce qu'**au moins un signal de référence connu ($\underline{U}_{dae1}$, $\underline{U}_{dae2}$, $\underline{U}_{dae3}$) attaque directement au moins un canal d'excitation (Cha1, Cha2), le signal de réponse ($\underline{U}_{Ch1x}$, $\underline{U}_{ch2x}$, $\underline{U}_{ch3x}$, $\underline{U}_{ch4x}$) du canal d'excitation (Cha1, Cha2) attaqué est détecté et la fonction de transfert du canal d'excitation (Cha1, Cha2) est identifiée sur la base du signal de référence connu ($\underline{U}_{dae1}$, $\underline{U}_{dae2}$, $\underline{U}_{dae3}$) et sur la base du signal de réponse de canal d'excitation détecté ($\underline{U}_{ch1x}$, $\underline{U}_{ch2x}$, $\underline{U}_{ch3x}$, $\underline{U}_{ch4x}$).

7. Procédé selon la revendication 5 ou 6, **caractérisé en ce que** le profil de transmission réel du canal de mesure (Ch1, Ch2, Chn) et/ou le profil de transmission réel du canal d'excitation (Cha1, Cha2) est corrigé au moyen de la fonction de transfert identifiée du canal de mesure (Ch1, Ch2, Chn) et/ou au moyen de la fonction de transfert identifiée du canal d'excitation (Cha1, Cha2).

8. Procédé selon la revendication 7, **caractérisé en ce que** le profil de transmission réel du canal de mesure (Ch1, Ch2) et/ou le profil de transmission réel du canal d'excitation (Cha1, Cha2) est corrigé dans le domaine fréquentiel en décomposant le signal transmis ($\underline{U}_{chx}$) reçu par l'unité de commande et d'évaluation (4) en composantes orthogonales ($U_{chx,re}$, $U_{chx,im}$), en inversant la réponse en fréquence ($A_{chx}(f)$, $\varphi_{chx}(f)$) de la fonction de transfert identifiée ($\underline{G}_{chx,ident}$) du canal de mesure (Ch1, Ch2) ou du canal d'excitation (Cha1, Cha2) pour la fréquence d'excitation actuelle ($A^{-1}_{chx}(f)$, ($\varphi^{-1}_{chx}(f)$), en calculant les fonctions sinus et cosinus de la phase inversée obtenue ($\varphi^{-1}_{chx}(f)$) et en calculant, à l'aide de la réponse en amplitude inversée ($A^{-1}_{chx}(f)$), deux facteurs de correction ($U_{chx,re,cor}$, $U_{chx,im,cor}$) avec lesquels les composantes orthogonales mesurées ($U_{chx,re}$, $U_{chx,im}$) sont corrigées.

9. Procédé selon l'une des revendications 5 à 8, **caractérisé en ce que** le signal d'excitation actuel est utilisé en tant que signal de référence connu ($\underline{U}_{refx}$), ou **en ce que** des signaux sinusoïdaux ayant au moins des fréquences différentes, et ayant également de préférence des amplitudes différentes, sont utilisés en tant que signal de référence connu ($\underline{U}_{refx}$) et/ou des signaux rectangulaires sont utilisés en tant que signaux de référence connus ($\underline{U}_{refx}$).

10. Procédé selon l'une des revendications 5 à 9, **caractérisé en ce que** l'identification de la fonction de transfert ($\underline{G}_{chx,ident}$) du canal de mesure et/ou de la fonction de transfert ($\underline{G}_{chx,ident}$) du canal d'excitation est effectuée par détection de la réponse en fréquence, en particulier dans lequel la réponse en amplitude et la réponse en phase sont modélisées à l'aide d'un polynôme.

Fig. 1

Fig. 2

Fig. 3a

Fig. 3b

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8802105 A1

- DE 69214290 T2

**In der Beschreibung aufgeführte Nicht-Patentliteratur**

- **SCHRÖDER, T. ; KOLAHI, K. ; RÖCK, H.** Neuartige Regelung eines Coriolis-Massedurchflussmessers. *Technisches Messen,* 2004, vol. 71, 259-268